# EUROPÄISCHE PATENTSCHRIFT

(11) **EP 1 200 222 B1**
(45) Veröffentlichungstag und Bekanntmachung des Hinweises auf die Patenterteilung: **02.04.2003**
(21) Anmeldenummer: 00943744.3
(22) Anmeldetag: 27.05.2000
(51) Int. Cl.: B23B 51/02

(54) **BOHRER MIT AUSWECHSELBAREM SCHNEIDKOPF**
DRILL BIT HAVING A REPLACEABLE CUTTING HEAD
FORET A TETE DE COUPE REMPLACABLE

(30) Priorität: 03.08.1999 DE 19936579
(43) Veröffentlichungstag der Anmeldung: 02.05.2002
(73) Patentinhaber: KENNAMETAL INC., Latrobe, PA 15650-0231 (US)
(72) Erfinder: KRENZER, Ulrich, D-90513 Zirndorf (DE)
(74) Vertreter: Pohl, Hans Ludwig, Dipl.-Ing.
(86) Internationale Anmeldenummer: EP0004851
(87) Internationale Veröffentlichungsnummer: WO01008840

(56) Entgegenhaltungen:
- WO-A-98/10881
- DE-C- 94 340
- DE-C- 367 010
- FR-A- 828 642

## Beschreibung

Die Erfindung betrifft einen Bohrer mit einem auswechselbaren Schneidkopf. Bei einem solchen Bohrer ist auf einem Bohrerschaft ein Schneidkopf lösbar fixiert. Aus DE 196 05 157 A1 ist ein gattungsgemäßes Bohrwerkzeug bekannt, bei dem der Schneidkopf mit einem Zapfen in eine stimseitige Aufnahmeausnehmung des Bohrerschaftes hineinragt und dort mit einer quer zur Bohrerlängsachse angeordneten Schraube fixiert ist. Bei einem aus WO 98/53943 bekannten Bohrwerkzeug ist der Bohrkopf mit einem in Axialrichtung und in Richtung des Bohrerdrehsinns wirksamen Presssitz im Bohrerschaft fixiert.

Aufgabe der Erfindung ist es, einen Bohrer mit einer alternativen Fixierung des Schneidkopfes vorzuschlagen.

Diese Aufgabe wird durch einen Bohrer mit den Merkmalen des Anspruches 1 gelöst.

Der Schneidkopf liegt mit einer Anlagefläche an der Stimfläche des Bohrerschaftes an und erstreckt sich mit einem zentral aus der Anlagefläche vorstehenden Fixierzapfen in eine dazu komplementär ausgestaltete Aufnahmeausnehmung in der Stirnseite des Bohrerschaftes hinein. Der jeweils mit der Innenwandung der Ausnehmung zusammenwirkende Umfangsbereich des Fixierzapfens weist zwei Längsabschnitte auf, nämlich einen ersten Längsabschnitt, der mit einer zur Bohrerspitze weisenden, im Bohrerdrehsinn ansteigenden und mit einer Gegenfläche an der Innenwandung der Aufnahmeausnehmung zusammenwirkenden Schraubenfläche in einen zweiten Längsabschnitt übergeht. Bei einer derartigen Ausgestaltung lässt sich der Bohrkopf einfach mit seinem Fixierzapfen in die Aufnahmeausnehmung einsetzen und gegen den Bohrerdrehsinn fixieren. Dabei wird die Schraubenfläche auf die Gegenfläche der Aufnahmeausnehmung aufgeschoben und der Schneidkopf mit seiner Anlagefläche auf die Stimfläche des Bohrerschaftes gepresst. Diese Fixierung wird bei im Betrieb befindlichen Bohrer noch verstärkt.

Bei einer bevorzugten Ausführungsform verjüngt sich der zweite Längsabschnitt des Fixierzapfens zu seinem Freiende hin. Im gleichen Maß verengt sich die Aufnahmeausnehmung zu ihrem Boden hin. Dementsprechend stärker und stabiler können die die Aufnahmeausnehmung umgrenzenden Schaftwände in diesem Bereich sein. Der Werkzeugschaft ist somit hinsichtlich einer quer zur Bohrerlängsachse auf den Schneidkopf einwirkenden Kraft stabiler als dies bei einer sich etwa schwalbenschwanzförmig zu ihrem Boden hin erweiternden Aufnahmeausnehmung der Fall wäre. Eine besonders stabile Aufnahme und Zentrierung des Fixierzapfens in der Aufnahmeausnehmung ist dann gewährleistet, wenn das Freiende des Fixierzapfens mit einer zylindrischen Umfangsfläche und der sich daran anschließend und sich bis zur Schraubenfläche erstreckende Bereich mit einer konischen Umfangsfläche ausgestattet ist.

Um die axiale Verspannung zwischen Schneideinsatz und Werkzeugschaft zu begrenzen und um für den Schneideinsatz eine definierte Endlage zu schaffen, ist bei einer weiteren Ausführungsform vorgesehen, dass aus der Stimfläche des Bohrerschaftes ein Drehanschlag vorsteht, der in eine komplementär gestaltete Ausnehmung in der Anlagefläche des Schneideinsatzes hineinragt. Weiterhin erstrecken sich die Anlagefläche des Bohrkopfes und die Stimfläche des Werkzeugschaftes vorzugsweise jeweils rechtwinklig zur Bohrerlängsachse. Die Schraubenfläche kann mit der Bohrerlängsachse einen Winkel von 90° bilden. Vorzugsweise ist die Schraubenfläche jedoch schräg angeordnet und bildet einen Winkel, der < 90° und > 45° ist. Vorzugsweise beträgt der Winkel 60°. Durch die Schrägstellung der Schraubenfläche wird der Schneideinsatz zusätzlich zur axialen Verspannung mit einer zur Mittellängsachse des Bohrers hin gerichteten, ihn zentrierenden Kraft beaufschlagt.

Die Erfindung wird nun anhand von in den beigefügten Zeichnungen dargestellten Ausführungsbeispielen näher erläutert. Es zeigen:
- Fig. 1: den oberen Abschnitt eines Bohrers mit drei Spannuten und dementsprechend einem dreischneidigen Schneideinsatz in Seitenansicht,
- Fig. 2: die Seitenansicht des Schneideinsatzes nach Fig. 1,
- Fig. 3: eine Draufsicht auf den Schneideinsatz in Richtung des Pfeiles III in Fig. 2,
- Fig. 4: die Seitenansicht eines Bohrerschaftes nach Fig. 1 mit entferntem Schneideinsatz,
- Fig. 5: eine Draufsicht auf die Stimseite des Werkzeugschaft in Richtung des Pfeiles 5 in Fig. 4,
- Fig. 6: eine weitere Ausführungsform eines Schneideinsatzes in Längsschnittdarstellung,
- Fig. 7: eine weitere Ausführungsform eines Schneideinsatzes in Längsschnittdarstellung.
- Fig. 8: die Seitenansicht des oberen Bereiches eines Bohrers mit zweischneidigem Schneideinsatz,
- Fig. 9: den oberen Längsabschnitt des Bohrers mit herausgenommenem Schneideinsatz in Seitenansicht,
- Fig. 10: eine Draufsicht in Richtung des Pfeiles X in Fig. 9,
- Fig. 11: einen zweischneidigen Schneideinsatz in Seitenansicht, und
- Fig. 12: eine Draufsicht in Richtung des Pfeiles XII in Fig. 11.

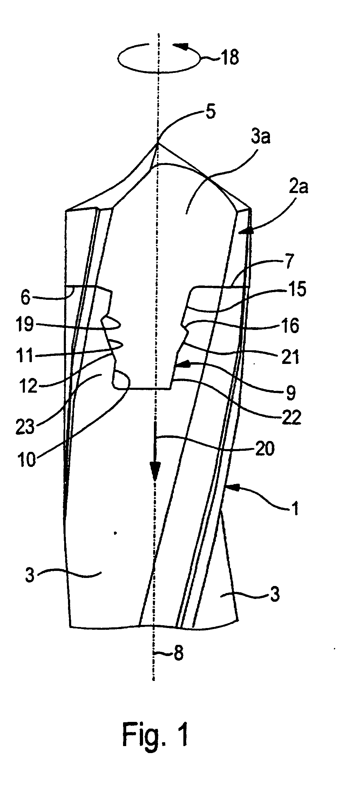

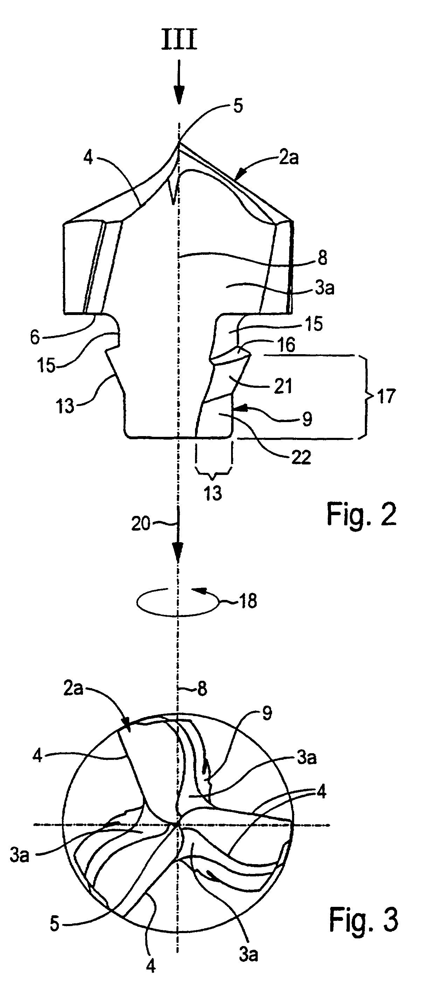

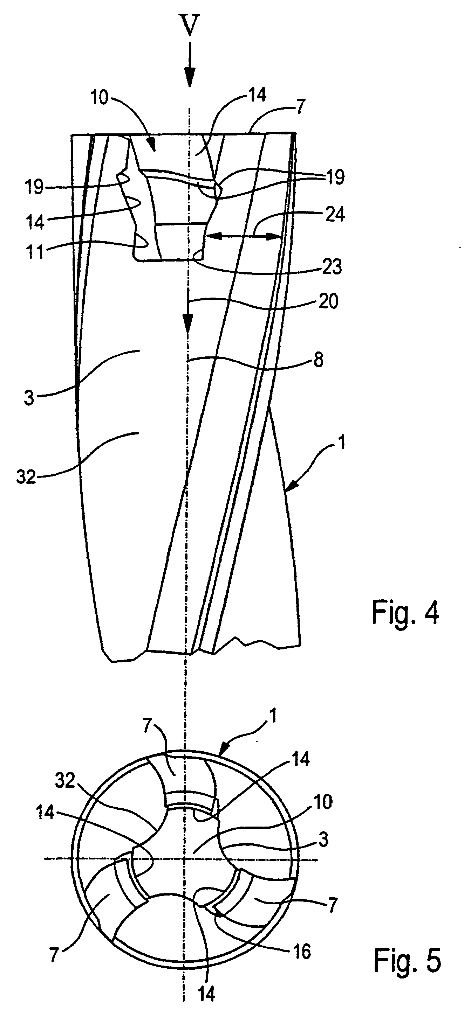

Die in den Abbildungen gezeigten Bohrer setzen sich aus einem Bohrerschaft 1 und einem Schneideinsatz 2 zusammen. Der Schneideinsatz 2a bei dem Bohrer gemäß Fig. 1 bis 5 ist dreischneidig. Dementsprechend sind im Bohrerschaft 1 insgesamt drei Spannuten 3 vorhanden, die sich mit Spannutabschnitten 3a in den Schneideinsatz 2a hinein fortsetzen. Der Schneideinsatz weist drei Hauptschneiden 4 auf, die - wie insbesondere der Draufsicht nach Fig. 3 zu entnehmen ist - etwa sternförmig angeordnet sind und in der Bohrerspitze 5 zusammenlaufen. Die Dreischneidigkeit des Schneideinsatzes bringt es mit sich, dass dieser, ebenfalls in der Draufsicht nach Fig.3 betrachtet, etwa die Form eines dreizackigen Stemes aufweist.

Der Schneideinsatz 2a weist eine ebene Anlagefläche 6 auf, die an der Stirnfläche 7 des Bohrerschaftes 1 plan anliegt. Die Anlagefläche 6 und die Stimfläche 7 erstrecken sich rechtwinklig zur Mittellängsachse 8 des Bohrers. An die Anlagefläche 6 ist ein zentraler Fixierzapfen 9 angeformt, der sich in Richtung der Mittellängsachse 8 erstreckt. Der Fixierzapfen 9 liegt im Montagezustand in einer komplementär ausgestalteten Aufnahmeausnehmung 10 im Bohrerschaft 1 ein und ist dort durch axial wirksame Hinterschnitte fixiert. Die Aufnahmeausnehmung10 mündet mit seitlichen, sich bis in die Stimfläche 7 erstreckenden Öffnungen 11 in die Spannuten 3. Im Montagezustand nach Fig. 1 fluchten die die Spannutabschnitte 3a und die Spannut 3 des Bohrerschaftes 1 bildenden Spanflächenbereiche miteinander, wobei sie lediglich durch die Trennfuge 12 zwischen Schneideinsatz 2a und Bohrerschaft 1 unterbrochen sind.

Die Spannutabschnitte 3a unterteilen den Fixierzapfen 9 in drei Umfangsabschnitte 13, die mit den Innenwandungen 14 der Aufnahmeausnehmung 10 zusammenwirken. Der Fixierzapfen 9 weist einen ersten Längsabschnitt 15 auf, der mit einer zur Bohrerspitze 5 weisenden und wie eine Radialschulter vom Umfangsabschnitt 13 abstehenden Schraubenfläche 16 in einen zweiten Längsabschnitt 17 übergeht. Die Schraubenfläche 16 steigt im Bohrerdrehsinn 18 zur Bohrerspitze 5 hin an und wirkt mit einer komplementär ausgestalteten Gegenfläche 19 an den Innenwandungen 14 der Aufnahmeausnehmung 10 zusammen. Zum Fixieren des Schneideinsatzes am Bohrerschaft 1 wird dieser mit dem Fixierzapfen 9 in die Aufnahmeausnehmung 10 so eingesetzt, dass seine Umfangsabschnitte 13 im Bereich der Öffnungen 11 angeordnet sind. Durch eine Drehung entgegen dem Bohrerdrehsinn 18 gelangen die Schraubenflächen 16 unter die Gegenflächen 19 an die Innenwandungen 14, wodurch der Schneideinsatz in Richtung des Pfeiles 20 mit seiner Anlagefläche 6 an die Stimfläche 7 gepresst wird.

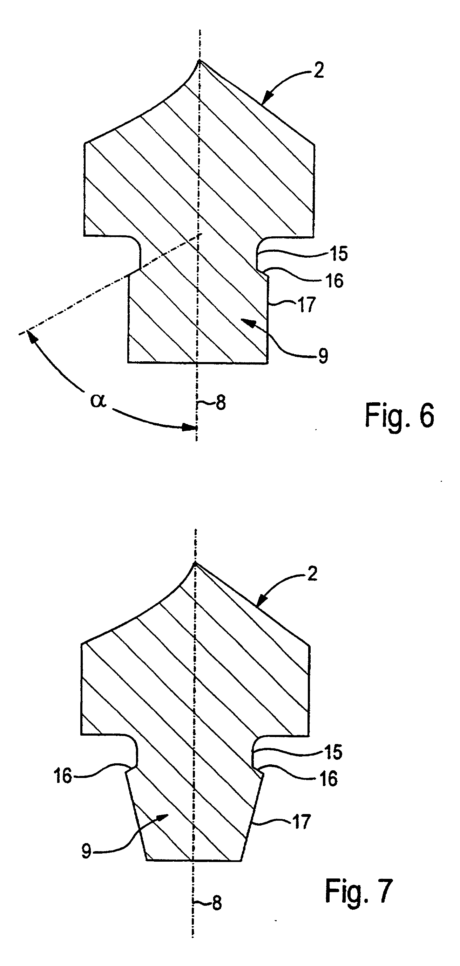

Die mit den Innenwandungen 14 zusammenwirkende Fläche des zweiten Längsabschnittes 17 kann eine Zylinderteilfläche sein, wie in Fig. 6 dargestellt. Bei dem Ausführungsbeispiel nach Fig. 7 verjüngt sich der zweite Längsabschnitt 17 zum Bohrerschaft hin konisch. Besonders bevorzugt ist jedoch die Ausgestaltung nach Fig. 2, bei der sich an die Schraubenfläche 16 ein konischer Abschnitt 21 anschließt, der in einem zylindrischen Abschnitt 22 übergeht. Der zylindrische Abschnitt 22 bewirkt eine Zentrierung des Schneideinsatzes 2a in der Aufnahmeausnehmung 10. Der Durchmesser des zylindrischen Abschnitts 22 kann gegenüber den sich spitzenwärts daran anschließenden und die für die axiale Verspannung notwendigen Schraubenflächen 16 tragenden Abschnitten mit einem relativ kleinen Durchmesser ausgestaltet sein. Dementsprechend kann auch der mit dem zylindrischen Abschnitt 22 zusammenwirkende Bereich 23 der Aufnahmeausnehmung 10 einen geringen Innendurchmesser aufweisen. Dies bedeutet wiederum eine größere Wandstärke 24 im Bereich 23 und damit eine erhöhte Stabilität. Gerade in dem Bereich 23 wirken sich aufgrund der Hebelwirkung verstärkt aus. Die größere Wandstärke 24 in diesem Bereich gewährleistet jedoch eine erhöhte Stabilität des Bohrerschaftes 1.

Die Schraubenflächen 16 am Fixierzapfen 9 eines Schneideinsatzes 2 können grundsätzlich mit der Mittellängsachse 8 des Bohrers bzw. des Schneideinsatzes einen Winkel von 90° bilden. Bevorzugt ist jedoch, dass die Schraubenflächen 16 schräg angeordnet sind und mit der Mittellängsachse 8 einen Winkel α bilden, der < 90° und ≥ 45° ist.

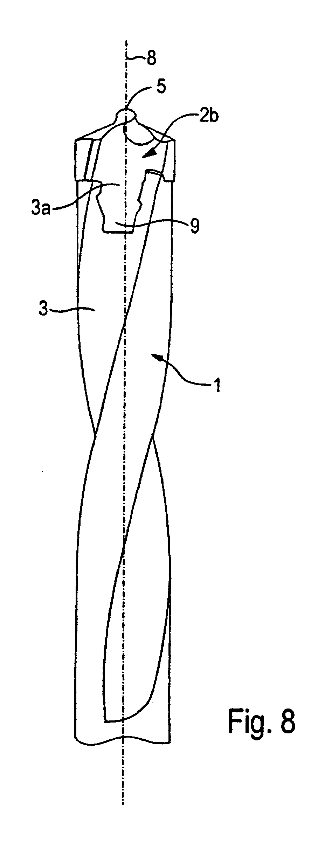

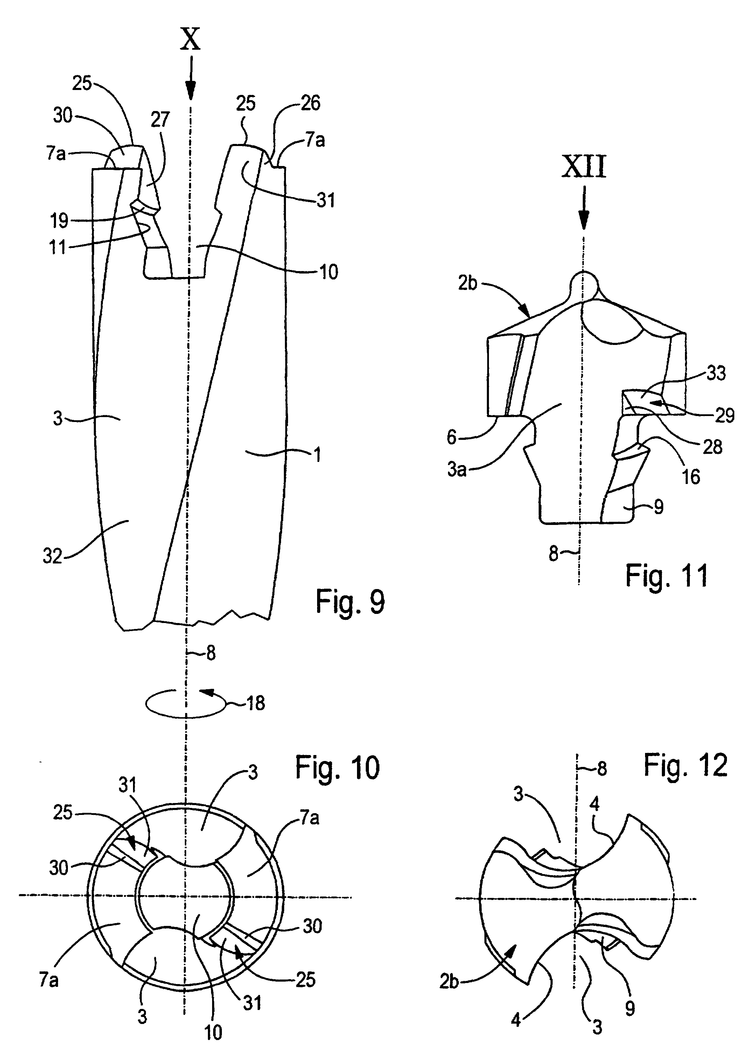

In Fig. 8 bis 12 ist ein Bohrer mit zwei Spannuten und dementsprechend mit zweischneidigem Schneideinsatz 2b gezeigt. Die Ausgestaltung des Fixierzapfens 9 und der Aufnahmeausnehmung 10 dieser Bohrer entspricht jener der oben beschriebenen Bohrer. Unterschiedlich ist, dass aus der Stimfläche 7a des Bohrerschaftes 1 zwei Drehanschläge 25 vorstehen. Die Drehanschläge 25 liegen sich diametral gegenüber und sind mit vier Flächen im Wesentlichen keilförmig ausgebildet. Ihre Außenfläche 26 wird von der Umfangsfläche des Bohrerschaftes 1 gebildet. Ihre Innenfläche 27 wirkt mit einer komplementär gestalteten Gegenfläche 28 zusammen, die Teil der Wandung einer den Drehanschlag 25 aufnehmenden Ausnehmung 29 in der Anlagefläche 6 des Schneideinsatzes 2b ist. Weiterhin weisen die Drehanschläge zwei Schrägflächen auf, wobei die eine Schrägfläche 30 in Richtung des Bohrerdrehsinns 18 weist und jeweils in eine Stimfläche 7a übergeht. Die andere Schrägfläche 31 weist gegen den Bohrerdrehsinn 18 und ist eine Teilfläche der die Spannut 3 bildenden Spanfläche 32. Die Schrägfläche 30 wirkt mit einer von der Wandung der Ausnehmung 29 gebildeten Schrägfläche 33 als Gegen-Anschlagfläche zusammen.

### Bezugszeichenliste

- 1: Bohrerschaft
- 2: Schneideinsatz
- 3: Spannut
- 3a: Spannutabschnitt
- 4: Hauptschneide
- 5: Bohrerspitze
- 6: Anlagefläche
- 7: Stimfläche
- 8: Mittellängsachse
- 9: Fixierzapfen
- 10: Aufnahmeausnehmung
- 11: Öffnung
- 12: Trennfuge
- 13: Umfangsabschnitt
- 14: Innenwand
- 15: erster Längsabschnitt
- 16: Schraubenfläche
- 17: zweiter Längsabschnitt
- 18: Bohrdrehsinn
- 19: Gegenfläche
- 20: Pfeil
- 21: konischer Abschnitt
- 22: zylindrischer Abschnitt
- 23: Bereich
- 24: Wandstärke
- 25: Drehanschlag
- 26: Außenfläche
- 27: Innenfläche
- 28: Gegenfläche
- 29: Ausnehmung
- 30: Schrägfläche
- 31: Schrägfläche
- 32: Spanfläche
- 33: Schrägfläche

- ∝: Winkel

## Patentansprüche

1. Bohrer mit einem Bohrerschaft (1) und einem daran lösbar fixierten, den Spitzenbereich des Bohrers bildenden Schneideinsatz und wenigstens einer im Bohrerschaft (1) angeordneten und sich in den Schneideinsatz (2) hinein fortsetzenden Spannut (3), wobei der Schneideinsatz mit einer sich rechtwinklig zur Mittellängsachse (8) des Bohrers erstreckenden Anlagefläche (6) an der Stirnfläche (7) des Bohrerschaftes (1) anliegt und sich mit einem zentral aus der Anlagefläche (6) vorstehenden Fixierzapfen (9) in eine komplementär dazu ausgestaltete Aufnahmeausnehmung (10) in der Stimfläche (7) des Bohrerschaftes (1) hinein erstreckt,
**dadurch gekennzeichnet,**
**dass** wenigstens ein Umfangsabschnitt (13) des Fixierzapfens (9) einen ersten Längsabschnitt (15) aufweist, der mit einer vom Bohrerschaft (1) wegweisenden, im Bohrdrehsinn (18) zur Bohrerspitze (5) hin ansteigenden und mit einer Gegenfläche (19) an der Innenwandung (14) der Aufnahmeausnehmung (10) zusammenwirkende Schraubenfläche (16) in einen zweiten Längsabschnitt (17) übergeht.

2. Bohrer nach Anspruch 1,
**dadurch gekennzeichnet,**
**dass** sich der zweite Längsabschnitt (17) zu seinem Freiende hin verjüngt.

3. Bohrer nach Anspruch 2,
**gekennzeichnet durch**
einen ersten, das Freiende bildenden Zapfenabschnitt (22) mit zylindrischer Umfangsfläche und einem sich bis zur Schraubenfläche (16) erstreckenden zweiten Abschnitt (21) mit konischer Umfangsfläche.

4. Bohrer nach Anspruch 1, 2 oder 3,
**gekennzeichnet durch**
einen von der Stirnfläche (7) des Bohrerschaftes (1) vorstehenden, in eine im Wesentlichen komplementär gestaltete Ausnehmung in der Anlagefläche (6) des Schneideinsatzes (2) hineinragenden Drehanschlag (25).

5. Bohrer nach einem der Ansprüche 1 bis 4,
**dadurch gekennzeichnet,**
**dass** die Schraubenfläche (16) mit der Bohrerlängsachse (8) einen Winkel (∝) von 90° bis 45° bildet.

6. Bohrer nach Anspruch 5,
**gekennzeichnet durch**
einen Winkel (∝) von 60°.

## Claims

1. Drill bit having a drill bit shank (1) and a cutting insert, releasably fastened thereto and forming the point region of the drill bit, and at least one flute (3) arranged in the drill bit shank (1) and extending into the cutting insert (2), the cutting insert, with a bearing surface (6) which extends at right angles to the centre longitudinal axis (8) of the drill bit, bearing against the end face (7) of the drill bit shank (1) and, with a fixing pin (9) which projects centrally from the bearing surface (6), extending into a locating recess (10), designed to be complementary thereto, in the end face (7) of the drill bit shank (1), **characterized in that** at least a circumferential section (13) of the fixing pin (9) has a first longitudinal section (15) which, with a helical surface (16) which points away from the drill bit shank (1), rises towards the drill bit point (5) in the drilling direction of rotation (18) and interacts with a mating surface (19) on the inner wall (14) of the locating recess (10), merges into a second longitudinal section (17).

2. Drill bit according to Claim 1, **characterized in that** the second longitudinal section (17) narrows towards its free end.

3. Drill bit according to Claim 2, **characterized by** a first pin section (22) forming the free end and having a cylindrical circumferential surface and by a second section (21) extending up to the helical surface (16) and having a conical circumferential surface.

4. Drill bit according to Claim 1, 2 or 3, **characterized by** a rotary stop (25) projecting from the end face (7) of the drill bit shank (1) and projecting into a recess of essentially complementary form in the bearing surface (6) of the cutting insert (2).

5. Drill bit according to one of Claims 1 to 4, **characterized in that** the helical surface (16) forms an angle (α) of 90° to 45° with the drill bit longitudinal axis (8).

6. Drill bit according to Claim 5, **characterized by** an angle (α) of 60°.

## Revendications

1. Foret comportant une tige de foret (1) et un insert de coupe fixé de façon détachable sur celle-ci et formant la zone de pointe du foret, et au moins une gorge à copeaux (3) ménagée dans la tige de foret (1) et se prolongeant jusque dans l'insert de coupe (2), dans lequel l'insert de coupe s'applique par une surface d'appui (6) s'étendant à angle droit par rapport à l'axe longitudinal médian (8) du foret contre la surface frontale (7) de la tige de foret (1) et s'étend par un plot de fixation (9) faisant saillie au centre hors de la surface d'appui (6) jusque dans un évidement de réception (10) ménagé de façon complémentaire à celui-ci dans la surface frontale (7) de la tige de foret (1),
**caractérisé en ce que**
au moins un tronçon périphérique (13) du plot de fixation (9) comprend un premier tronçon longitudinal (15) qui se transforme en un deuxième tronçon longitudinal (17) par une surface hélicoïdale (16) qui est dirigée en éloignement de la tige de foret (1), qui monte vers la pointe de foret (5) dans le sens de rotation de perçage (18) et qui coopère avec une contre-surface (19) sur la paroi intérieure (14) de l'évidement de réception (10).

2. Foret selon la revendication 1, **caractérisé en ce que** le deuxième tronçon longitudinal (17) va en se rétrécissant vers son extrémité libre.

3. Foret selon la revendication 2, **caractérisé par** un premier tronçon de plot (22) formant l'extrémité libre et présentant une surface périphérique cylindrique, et par un deuxième tronçon (21) s'étendant jusqu'à la surface hélicoïdale (16) et présentant une surface périphérique conique.

4. Foret selon l'une des revendications 1, 2 ou 3, **caractérisé par** une butée de rotation (25) qui fait saillie de la surface frontale (7) de la tige de foret (1) et qui pénètre dans un évidement ménagé sensiblement de façon complémentaire dans la surface d'appui (6) de l'insert de coupe (2).

5. Foret selon l'une des revendications 1 à 4, **caractérisé en ce que** la surface hélicoïdale (16) forme un angle (α) de 90° à 45° avec l'axe longitudinal (8) du foret.

6. Foret selon la revendication 5, **caractérisé par** un angle (α) de 60°.
